# EUROPEAN PATENT APPLICATION

(11) **EP 4 715 691 A1**
(43) Date of publication of application: **25.03.2026**
(21) Application number: 25202939.2
(22) Date of filing: 18.09.2025
(51) Int. Cl.: G06N 20/00

(54) **SYSTEM, METHOD AND PLATFORM FOR CONVERSION OF RESEARCH PUBLICATIONS INTO QUALITY-ASSURED, PRACTITIONER-ACCESSIBLE CONTENT**

(30) Priority: 19.09.2024 US 202463696523 P; 04.09.2025 US 202519318539
(71) Applicant: The Institute of Electrical and Electronics Engineers, Inc., New York, NY 10016 (US)
(72) Inventor: Beebe, Marc, NEW YORK, 10016 (US); Fish, Robert Stephen, NEW YORK, 10016 (US); Kirkici, Hulya, NEW YORK, 10016 (US); Kirschner, Joshua Lawrence, NEW YORK, 10016 (US); Ramirez, James, NEW YORK, 10016 (US); Robson, Robert Oscar, NEW YORK, 10016 (US); Scott, Matthew Robert, NEW YORK, 10016 (US)
(74) Representative: ip21 Ltd

(57) **Abstract**

A system, method, and platform for converting academic research publications into quality-assured, practitioner-accessible content. The invention employs a network of specialized, autonomous AI agents working collaboratively with original authors to transform complex academic papers into industry-relevant, multimedia-enriched articles. The system performs contextual analysis of academic papers, identifies key patterns and structural elements, and correlates these with industry concepts. It dynamically integrates multimedia elements, establishes collaborative feedback loops with original authors, and incorporates simulated peer review mechanisms. The invention features continuous learning capabilities that leverage author interactions to improve future performance. This approach bridges the gap between academic research and industry application by making complex research publications more accessible, understandable, and relevant to practitioners while maintaining the accuracy and integrity of the original research.

## Description

### CROSS-REFERENCE TO RELATED APPLICATIONS

This application claims the benefit of U.S. Provisional Patent Application No. 63/696,523, filed September 19, 2024, entitled "SYSTEM, METHOD AND PLATFORM FOR CONVERSION OF RESEARCH PUBLICATIONS INTO QUALITY-ASSURED, PRACTITIONER-ACCESSIBLE CONTENT," the disclosure of which is hereby incorporated by reference in its entirety.

### FIELD OF THE INVENTION

The present invention relates generally to content transformation systems, and more particularly to an artificial intelligence (AI) driven system for converting academic research publications into quality-assured, multimedia-enriched content accessible to industry practitioners.

### BACKGROUND OF THE INVENTION

Academic research papers contain valuable insights that can benefit industry professionals across various technical fields. However, these papers are often written in complex, theoretical language that makes them challenging for practitioners to understand and apply. The specialized terminology, detailed methodologies, and scholarly focus create significant barriers for industry professionals seeking to implement research findings in practical applications.

Existing approaches to making academic content more accessible include manual summarization by technical writers, simplified abstracts, and general-purpose AI summarization tools. However, these approaches have significant limitations. Manual summarization is time-consuming and expensive, simplified abstracts often lack sufficient detail for practical implementation, and general-purpose AI summarization tools frequently miss important technical nuances or generate inaccurate content due to lack of domain expertise.

Furthermore, existing solutions typically lack input from original authors, do not tailor content specifically for industry applications, and fail to leverage multimedia elements to enhance understanding. These limitations result in a persistent gap between academic research and industry practice, slowing the adoption of innovative technologies and approaches in real-world applications.

There is a need for an intelligent system that can transform academic publications into high-quality, industry-relevant content while maintaining accuracy through author collaboration and quality assurance measures. Such a system should also be capable of continuous improvement based on feedback and interactions.

### SUMMARY OF THE INVENTION

Both the foregoing brief overview and the following detailed description provide examples and are explanatory only. Accordingly, the foregoing brief overview and the following detailed description should not be considered to be restrictive. Further, features or variations may be provided in addition to those set forth herein. For example, embodiments may be directed to various feature combinations and sub-combinations described in the detailed description. Additional aspects of the disclosure will be set forth in part in the description which follows, and in part will be obvious from the description, or can be learned by practice of the disclosure. The advantages of the disclosure will be realized and attained by means of the elements and combinations particularly pointed out in the appended claims. It is to be understood that both the foregoing general description and the following detailed description are explanatory only and are not restrictive of the disclosure, as claimed.

The present invention provides a system and method for converting academic research publications into quality-assured, multimedia-enriched content accessible to industry practitioners using an AI-driven collaborative workflow. The embodiments described herein may include or be implemented in conjunction with various types of artificial intelligence (AI) systems, including but not limited to machine learning systems, neural networks, and large language models. It should be understood that the descriptions provided herein are merely examples, and the invention may be implemented using various AI architectures, algorithms, and approaches.

The present invention provides a system, method, and platform for converting academic research publications into quality-assured, multimedia-enriched content accessible to industry practitioners using an AI-driven collaborative workflow. The system bridges the gap between complex academic research and practical industry applications by transforming theoretical content into accessible, actionable knowledge while maintaining accuracy through author collaboration and quality assurance measures.

In one aspect, the invention comprises a network of autonomous, specialized AI agents that analyze academic papers, generate industry-focused content, and collaborate with original authors to ensure accuracy and relevance. The system incorporates multimedia elements, simulated peer review, and continuous learning capabilities to enhance understanding and maintain quality.

In another aspect, the invention provides a method for transforming academic content that includes steps for contextual analysis, multimedia integration, author collaboration, and quality assurance through simulated peer review. The method leverages machine learning to progressively enhance system performance based on feedback and interactions.

In yet another aspect, the invention includes a platform that serves as the interface between the AI system, authors, and industry practitioners. The platform facilitates content discovery, collaboration, publication, and consumption, providing a seamless experience for all stakeholders.

The invention offers several advantages over existing approaches, including enhanced accuracy through author collaboration, improved accessibility through industry-specific language and examples, better understanding through multimedia integration, consistent quality through simulated peer review, and continuous improvement through machine learning. These and other aspects, features, and advantages of the present invention will become apparent from the following detailed description of preferred embodiments, which is to be read in connection with the accompanying drawings.

### BRIEF DESCRIPTION OF THE DRAWINGS

The accompanying drawings, which are incorporated in and constitute a part of this disclosure, illustrate various embodiments of the present disclosure. The drawings contain representations of various trademarks and copyrights owned by the Applicants. In addition, the drawings may contain other marks owned by third parties and are being used for illustrative purposes only. All rights to various trademarks and copyrights represented herein, except those belonging to their respective owners, are vested in and the property of the Applicants. The Applicants retain and reserve all rights in their trademarks and copyrights included herein, and grant permission to reproduce the material only in connection with reproduction of the granted patent and for no other purpose. Furthermore, the drawings may contain text or captions that may explain certain embodiments of the present disclosure. This text is included for illustrative, non-limiting, explanatory purposes of certain embodiments detailed in the present disclosure.
FIG. 1 is a high-level block diagram illustrating the main components of the system and integration points according to an embodiment of the present invention.
FIG. 2 is a block diagram illustrating the AI agent network and their interactions according to an embodiment of the present invention.
FIG. 3 is a flow diagram depicting the feedback and adaptation process of the system according to an embodiment of the present invention.
FIG. 4 is a flow diagram illustrating the workflow phases of the content conversion process according to an embodiment of the present invention.
FIG. 5 is a diagram showing a comparison between an original academic paper and its transformed industry-oriented version according to an embodiment of the present invention.
FIGS. 6A, 6B, and 6C are diagrams illustrating the industry content platform in accordance with some embodiments of the present invention.
FIG. 7A is a flowchart illustrating the first part of a method for converting academic papers into industry-oriented content, according to some embodiments of the present disclosure.
FIG. 7B is a flowchart extending from FIG. 7A and further illustrating the method, according to some embodiments of the present disclosure.
FIG. 8 is a high-level block diagram of a computing device that may be used to implement components of the system in accordance with some embodiments.

### DETAILED DESCRIPTION OF THE INVENTION

The present disclosure includes many aspects and features. Moreover, while many aspects and features relate to, and are described in, the context of a system and method for conversion of research publications into quality-assured, practitioner-accessible content, embodiments of the present disclosure are not limited to use only in this context. The present disclosure may be implemented in various applications where transformation of complex content into more accessible formats is desired.

It is also to be understood that the terminology used herein is for the purpose of describing particular aspects only and is not intended to be limiting. As used in the specification and in the claims, the term "comprising" can include the aspects "consisting of" and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used herein, the terms "about" and "at or about" mean that the amount or value in question can be the value designated some other value approximately or about the same. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

The terms "first," "second," "first part," "second part," and the like, where used herein, do not denote any order, quantity, or importance, and are used to distinguish one element from another, unless specifically stated otherwise. As used herein, the terms "optional" or "optionally" means that the subsequently described event or circumstance can or cannot occur, and that the description includes instances where said event or circumstance occurs and instances where it does not. For example, the phrase "optionally affixed to the surface" means that it can or cannot be fixed to a surface.

In the following description, for the purposes of explanation, specific details are set forth in order to provide a thorough understanding of examples of the invention. However, it will be apparent that various examples may be practiced without these specific details.

***Generative AI and LLM (Large Language Model):*** Generative AI encompasses a subset of artificial intelligence technologies that use advanced neural networks to contextually process input data-such as text, images, and more-and generate new, relevant content. A Large Language Model (LLM) is a specific type of generative AI that employs transformer-based architectures to process and generate human-like text.

***AI Agent:*** An AI agent is a software entity designed to perform automated tasks on behalf of users or other systems. It operates within a set of defined parameters and utilizes artificial intelligence technologies, including machine learning and rule-based logic, to make decisions, solve problems, and manage communications. AI agents can be autonomous or semi-autonomous and are often designed to interact with environments through data inputs and outputs. In complex systems, these agents can also interact with each other and human users to achieve specific goals or execute processes within a broader artificial intelligence system.

***Agentic:*** Pertaining to the quality of an entity (often an AI agent) to act in an environment with a degree of autonomy. In the context of artificial intelligence, an "agentic" system or agent is one that does not just passively respond to commands but actively takes initiative based on its programming and the data it processes. These agents are capable of making decisions, initiating actions, and adapting to changes in their environment without constant human oversight. This characteristic is crucial for systems that require dynamic and adaptive responses to complex or changing conditions.

***LLM Hallucination:*** In the context of large language models (LLMs), hallucination refers to the generation of incorrect or misleading information that is not supported by the input data or factual accuracy. This can occur due to biases in the training data or limitations in the model's understanding.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of aspects described in the specification.

It is understood that the apparatuses and systems disclosed herein have certain functions. Disclosed herein are certain structural requirements for performing the disclosed functions, and it is understood that there are a variety of structures that can perform the same function that are related to the disclosed structures, and that these structures will typically achieve the same result.

The present invention provides a system and method for converting academic research publications into quality-assured, multimedia-enriched content accessible to industry practitioners. The system utilizes a network of specialized AI agents working in collaboration with original authors to transform complex academic papers into industry-relevant articles.

Although modules are disclosed with specific functionality, it should be understood that functionality may be shared between modules, with some functions split between modules, while other functions duplicated by the modules. Furthermore, the name of the module should not be construed as limiting upon the functionality of the module. Moreover, each stage in the claim language can be considered independently without the context of the other stages. Each stage may contain language defined in other portions of this specifications. Each stage disclosed for one module may be mixed with the operational stages of another module. Each stage can be claimed on its own and/or interchangeably with other stages of other modules. The following claims will detail the operation of each module, and inter-operation between modules.

Various hardware components may be used at the various stages of operations follow the method and computer-readable medium claims. For example, although the methods have been described to be performed by a computing device, it should be understood that, in some embodiments, different operations may be performed by different networked elements in operative communication with the computing device. For example, server 110 and/or computing device 800 may be employed in the performance of some or all of the stages disclosed with regard to the methods claimed below. Similarly, apparatus 105 may be employed in the performance of some or all of the stages of the methods. As such, apparatus 105 may comprise at least those architectural components as found in computing device 800.

### System Overview

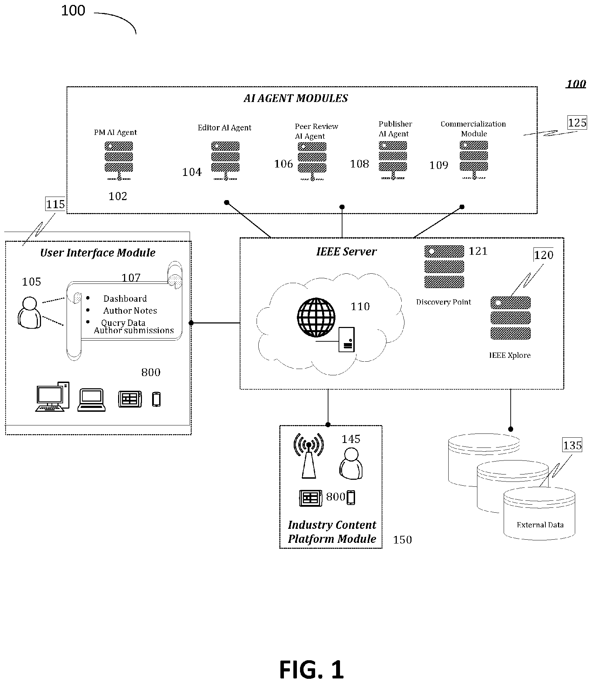

Referring to FIG. 1, a block diagram illustrates the main components of the system 100 according to an embodiment of the present invention. The system 100 provides a platform for converting academic research publications into quality-assured, multimedia-enriched content accessible to industry practitioners. The system 100 may be hosted on a centralized server 110, such as a cloud computing service. A user 105 may access the platform through a software application. The software application may be embodied as, for example, but not be limited to, a website, a web application, a desktop application, or a mobile application compatible with a computing device 800. One possible embodiment of the software application may be provided by the Xplore and IEEE suite of products and services provided by IEEE.

The system 100 includes AI Agent Modules 125, which comprise specialized AI agents that perform distinct tasks within the content conversion workflow. A user 105 may interact with the platform via a user interface module 115 where they are able to access a dashboard, upload articles, query articles, add author notes, and make submissions all under inputs 107, and interact with the platform via one or more computing devices 800 (i.e., tablets, mobile devices, computers, laptops, and the like). In one or more embodiments, one or more users 145 may interact with the platform via an Industry Content Platform 150 module. Such users may include paid users, administrators, IEEE members, or members having another level of tiered access to resources than the common public user 105. The system 100 may include integration with content databases 135, which may store academic papers, converted industry articles, user data, and other relevant information. The system 100 may also integrate with IEEE Xplore 120 and Discovery Point 121 to access academic content and enhance content discovery.

In one or more embodiments, the platform may include a commercialization module 109. The commercialization module 109 may implement various revenue strategies, such as subscription fees for IEEE members and non-members, corporate licenses, sponsored content, and syndication opportunities. Revenue allocation back to contributing Societies and Organizational Units (OUs) may be managed using an algorithm similar to the "Xplore algorithm," ensuring that AI-generated content cites and points to the original Xplore version, thereby enhancing its value. The system 100 may also include a revision tracking module 130 that monitors changes made throughout the content conversion workflow. The revision tracking module 130 may maintain a comprehensive history of all modifications, edits, and updates applied to each academic paper during its transformation into industry-oriented content. This module may create timestamped entries for each change, allowing stakeholders to review the evolution of content from its original academic form to the final published version.

The revision tracking module 130 may interface with each of the AI Agent Modules 125 to capture their respective contributions to the content transformation process. When the Editor AI Agent 104 makes initial adaptations to academic terminology, the revision tracking module 130 may record these changes along with the rationale behind each modification. Similarly, when the Peer Review AI Agent 106 suggests improvements or identifies areas requiring clarification, these recommendations may be logged within the revision tracking system.

A version comparison component 132 may be integrated with the revision tracking module 130 to provide visual representations of changes between different iterations of the transformed content. The version comparison component 132 may highlight additions, deletions, and modifications using color-coding or other visual indicators. This functionality may enable corresponding authors 155 to quickly identify what has been changed and provide targeted feedback on specific modifications.

The system 100 may further include a collaborative annotation system 140 that allows multiple stakeholders to contribute comments and suggestions throughout the content conversion process. The collaborative annotation system 140 may provide threaded discussion capabilities where authors, reviewers, and AI agents may engage in structured conversations about specific sections or concepts within the transformed content. Each annotation may be linked to specific portions of the text, multimedia elements, or structural components of the article.

An automated notification system 142 may work in conjunction with the collaborative annotation system 140 to alert relevant parties when new comments are added or when responses are required. The automated notification system 142 may send targeted alerts to corresponding authors 155 when their input is needed, or to members of the content governance system 216 when editorial review is required. These notifications may be customized based on user preferences and may include summaries of pending actions or deadlines.

The system 100 may incorporate a content analytics engine 144 that tracks user engagement patterns with published industry-oriented articles. The content analytics engine 144 may monitor metrics such as reading time, interaction with multimedia elements, sharing frequency, and user feedback ratings. This data may be fed back into the online machine learning process 304 to inform future content transformation decisions and optimize the system's performance for different types of academic papers or industry audiences.

A semantic enrichment module 146 may enhance the contextual analysis capabilities of the Editor AI Agent 104 by providing additional layers of meaning and context to academic concepts. The semantic enrichment module 146 may maintain relationships between technical terms, industry applications, and related concepts across different domains. This module may enable the system to identify cross-disciplinary connections and suggest relevant examples or applications that may not be explicitly mentioned in the original academic paper.

The system 100 may also include a quality metrics dashboard 148 that provides real-time visibility into the performance of the content conversion workflow. The quality metrics dashboard 148 may display statistics related to conversion times, author satisfaction ratings, peer review scores, and user engagement metrics for published articles. This dashboard may enable system administrators to identify bottlenecks in the workflow and optimize resource allocation across the AI Agent Modules 125.

### AI Agent Network

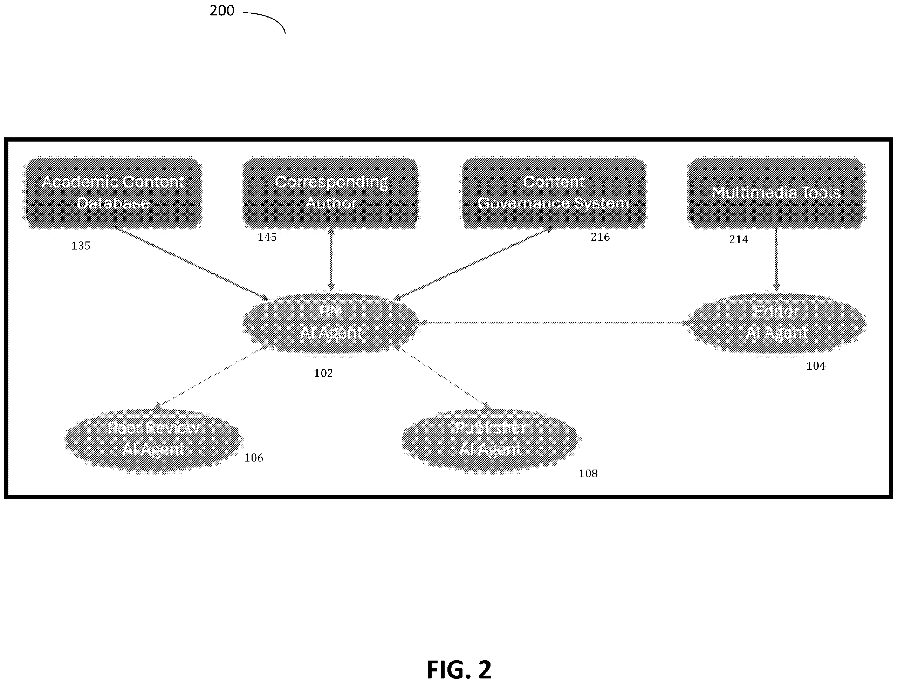

Referring to FIG. 2, a block diagram illustrates the AI agent network of the system 200 according to an embodiment of the present invention. The system 200 includes a Project Manager (PM) AI Agent 102, an Editor AI Agent 104, a Peer Review AI Agent 106, and a Publisher AI Agent 108. These agents interact with each other and external components through APIs to perform distinct tasks within the content conversion workflow.

The PM AI Agent 102 is responsible for overseeing, organizing, and facilitating tasks across all other AI agents, human author interaction, and external systems and tools. The PM AI Agent 102 manages the entire workflow from content discovery to publication, ensuring timely completion of the conversion process and quality of the output. The PM AI Agent 102 may also handle communication with corresponding authors 155, presenting drafts for review and collecting feedback.

The Editor AI Agent 104 is responsible for content analysis, core content adaptation and translation, and multimedia enrichment. The Editor AI Agent 104 performs contextual analysis of academic papers, identifies key patterns and structural elements, and correlates these with industry and academic concepts. It generates initial drafts of industry-oriented articles, adapting academic terminology to industry-standard language while preserving technical accuracy.

The Peer Review AI Agent 106 conducts simulated peer reviews and optionally manages interactions with a human editorial board. The Peer Review AI Agent 106 assesses the quality and relevance of converted articles using criteria established by industry experts and academic professionals. It evaluates factors such as clarity of explanations, practical relevance of examples, and accuracy of technical details.

The Publisher AI Agent 108 is responsible for finalizing and publishing the industry-oriented content. The Publisher AI Agent 108 ensures all quality standards have been met, manages metadata and categorization, and handles distribution across appropriate channels. It may also implement search engine optimization for discoverability and track content performance metrics.

The system 200 also includes integration with academic content databases 135 to facilitate real-time data access. A corresponding author 155 interacts with the system through the PM AI Agent 102. Multimedia tools 214 aid in generating relevant images and graphics. A content governance system 216 provides editorial oversight for content management and approval.

### Feedback and Adaptation Process

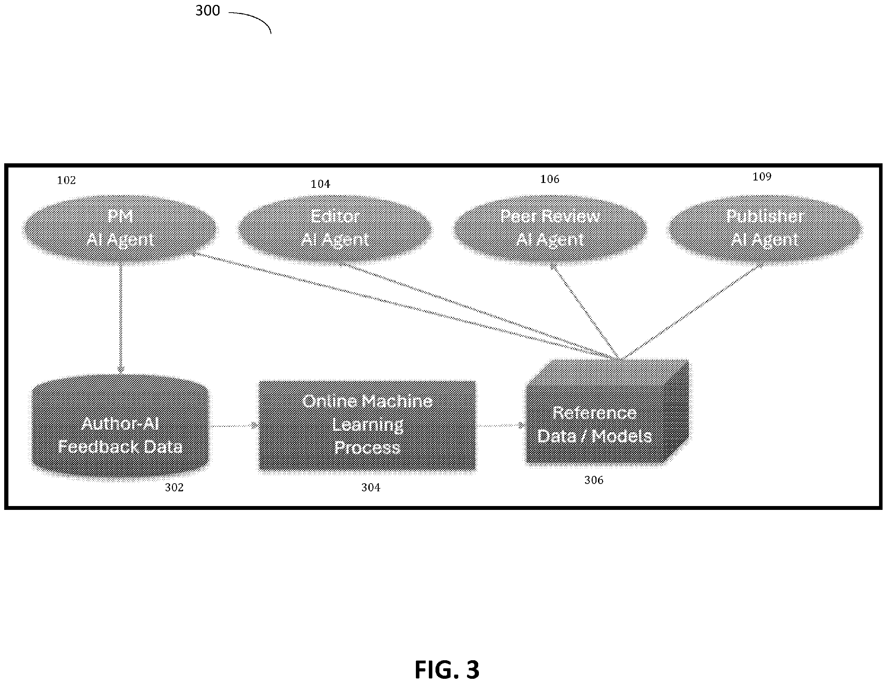

FIG. 3 illustrates the feedback and adaptation process of the system 300 according to an embodiment of the present invention. The system 300 incorporates a continuous learning mechanism that leverages author interactions to improve future performance.

Author-AI feedback data 302 is temporarily stored and used by an online machine learning process 304 to incrementally learn from past interactions. The feedback data may include author corrections, suggestions, clarifications, and approvals collected during the content conversion process. This data serves as valuable training input for improving the system's performance.

The online machine learning process 304 analyzes the feedback data to identify patterns, preferences, and common issues. It updates the system's understanding of how to effectively transform academic content into industry-relevant articles while maintaining accuracy and relevance.

The output of this process updates reference data and models 306, which are used to improve future outputs of the AI agents. The updated models enhance the system's ability to accurately analyze academic papers, generate relevant industry content, and anticipate author preferences, leading to progressively better performance over time.

This self-learning capability enables the system to adapt to different academic domains, writing styles, peer review practices and industry needs, becoming more efficient and effective with each content transformation project. The continuous improvement loop reduces the need for extensive human intervention while maintaining high-quality outputs.

### Content Conversion Workflow

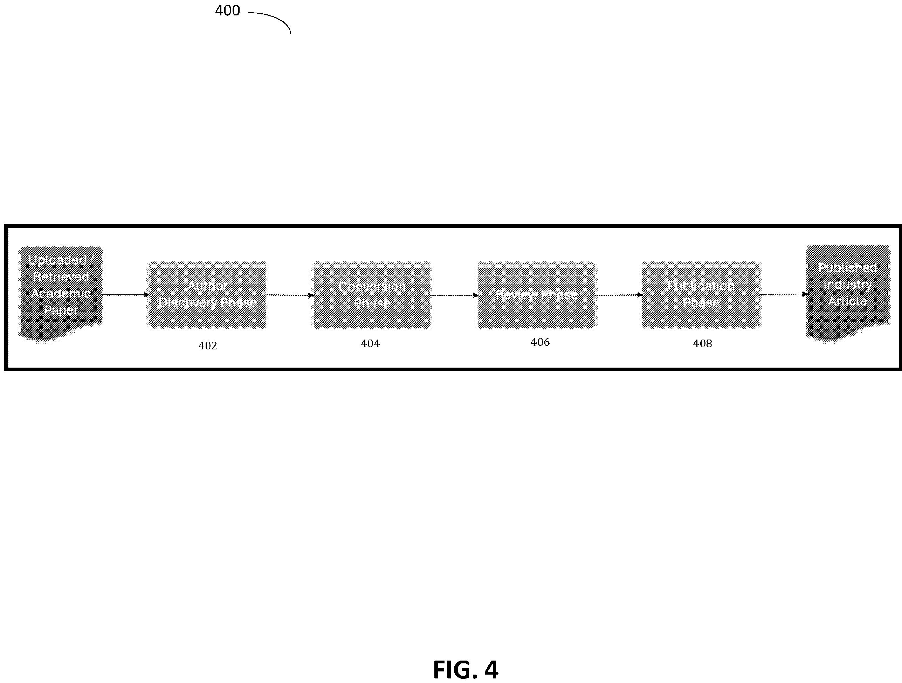

FIG. 4 depicts the workflow phases of the content conversion process 400 according to an embodiment of the present invention. The process includes four main phases: discovery, conversion, review, and publication.

The discovery phase 402 is where the system automatically identifies and engages with the corresponding original author. This phase may involve scanning newly published papers in academic databases such as IEEE Xplore, evaluating them based on criteria such as industry relevance and citation count, and initiating contact with authors of suitable papers. The PM AI Agent 102 manages this phase, identifying potential papers for conversion and establishing communication with authors.

The conversion phase 404 involves translating academic content into industry articles via the Editor Agent. During this phase, the Editor AI Agent 104 performs a contextual analysis of the paper, identifying key patterns and structural elements. It correlates these elements with industry and academic concepts previously learned through extensive training. The Editor AI Agent 104 then generates an initial draft of the industry-oriented article, adapting academic terminology to industry-standard language while preserving technical accuracy. This phase may also include the generation of multimedia elements such as diagrams, graphs, and interactive media to enhance understanding.

The review phase 406 involves quality assurance via the Peer Review Agent. The Peer Review AI Agent 106 conducts a simulated peer review of the generated content, assessing its quality and relevance using criteria established by industry experts and academic professionals. This process may involve optional human intervention when necessary, providing an additional layer of quality assurance. The draft is also presented to the corresponding author for review and feedback. The author may suggest changes, provide additional context, or clarify points through a user interface managed by the PM AI Agent 102.

Finally, the publication phase 408 includes a final check and publication via the Publisher Agent. The Publisher AI Agent 108 performs a final verification to ensure all quality standards have been met, adds appropriate metadata and categorization, and publishes the content on the platform. The resulting industry-oriented article includes the original academic insights translated into practical applications, enriched with multimedia elements, and vetted for quality and accuracy. Throughout this workflow, the system leverages data from interactions with human authors to progressively enhance its performance. This is achieved through the online machine learning process 304 which updates the reference data and models 306 used by the AI agents.

### Content Transformation Example

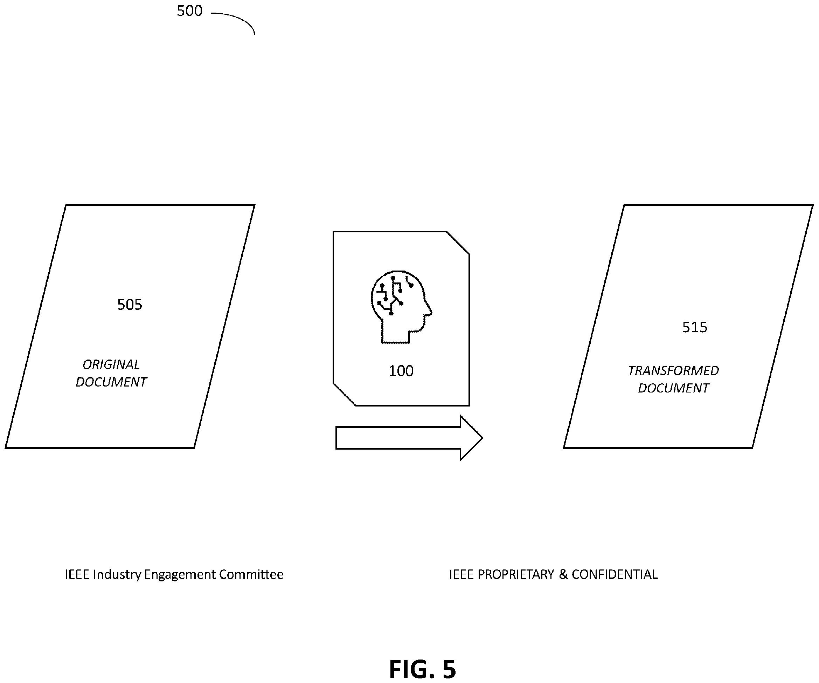

FIG. 5, 500 illustrates a comparison between an original academic paper and its transformed industry-oriented version according to an embodiment of the present invention. This example demonstrates how the system converts complex academic content into more accessible, industry-relevant format while maintaining technical accuracy.

The original academic paper, shown on the left, contains complex theoretical language, detailed mathematical formulations, and scholarly focus. The transformed industry-oriented article, shown on the right, presents the same core concepts but in a more accessible format, with practical applications highlighted, industry-specific terminology used, and visual elements enhanced for better understanding.
1. The transformation of complex theoretical language into practical industry-relevant content may be achieved through various techniques. The system may analyze academic papers to identify key patterns and structural elements within the input content. These elements may be correlated with industry and academic concepts previously learned through training on diverse language data sets, potentially enhancing the relevance and applicability of the content to specific industry needs.
2. Multimedia elements may be dynamically integrated into the translated articles. This integration may be facilitated by algorithms that select relevant multimedia based on the context and content of the academic paper. New multimedia elements, such as graphs, diagrams, and interactive media, may be generated and tailored to enhance understanding and engagement for industry practitioners.
3. Collaborative feedback loops may be established with the original corresponding authors to refine and validate the converted articles. This approach may ensure the integrity and accuracy of the content through iterative reviews and updates. Author insights and corrections may be incorporated to maintain the article's fidelity to the original academic intent and factual correctness.
4. The system may incorporate a simulated peer review mechanism via a content governance system. This mechanism may assess the quality and relevance of the converted articles before publication using criteria established by industry experts and academic professionals. AI modules may execute this process to provide timely and consistent evaluations, with optional human intervention when necessary.

This transformation makes the research findings more accessible and actionable for industry practitioners while maintaining the integrity of the original research. The collaboration with the original author ensures that the simplified version accurately represents the research findings and intentions. Referring again to FIG. 5, the transformation process may begin with the original document 505, which represents the academic paper in its initial form. The original document 505 may contain complex theoretical language, detailed mathematical formulations, extensive methodological descriptions, and scholarly references that may be challenging for industry practitioners to interpret and apply. The document may include specialized terminology specific to academic disciplines, abstract concepts that require translation into practical applications, and findings presented in formats optimized for peer review rather than industry implementation.

The transformation module 100 may serve as the central processing component that analyzes and converts the original document 505 into the transformed document 515. The transformation module 100 may incorporate the various AI agents described in the system architecture, including the Editor AI Agent 104, which performs the primary content analysis and adaptation functions. The module may apply contextual analysis algorithms to identify key concepts, methodologies, and findings within the original document 505 that have practical relevance for industry applications.

During the transformation process, the transformation module 100 may restructure the content to prioritize practical applications and real-world implications. The module may replace academic jargon with industry-standard terminology while preserving the technical accuracy of the original research. Complex theoretical concepts may be translated into concrete examples and use cases that demonstrate practical value for industry practitioners. Mathematical formulations may be simplified or presented with accompanying explanations that clarify their practical significance.

The transformed document 515 may represent the final output of the conversion process, presenting the same core research findings and insights as the original document 505 but in a format optimized for industry consumption. The transformed document 515 may include enhanced visual elements, such as diagrams, charts, and interactive components that facilitate understanding of complex concepts. Industry-relevant examples and case studies may be integrated to demonstrate practical applications of the research findings. The document structure may be reorganized to emphasize actionable insights and implementation guidance for practitioners.

The transformed document 515 may also incorporate multimedia enhancements that were not present in the original document 505. These enhancements may include interactive simulations that allow readers to explore different scenarios or parameter variations. Visual representations of data may be optimized for clarity and immediate comprehension rather than comprehensive detail. The document may include executive summaries tailored for different audience levels within industry organizations, from technical specialists to management decision-makers.

### Industry Content Platform

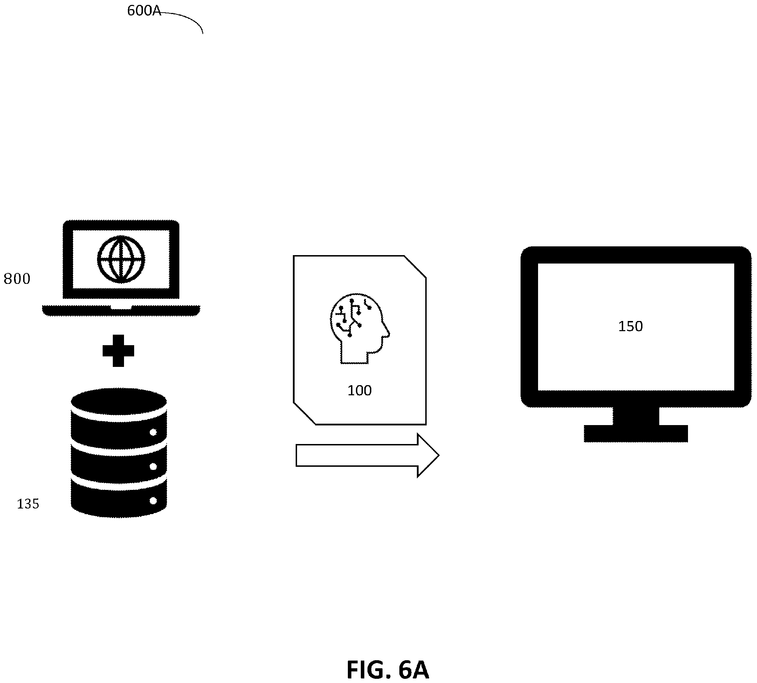

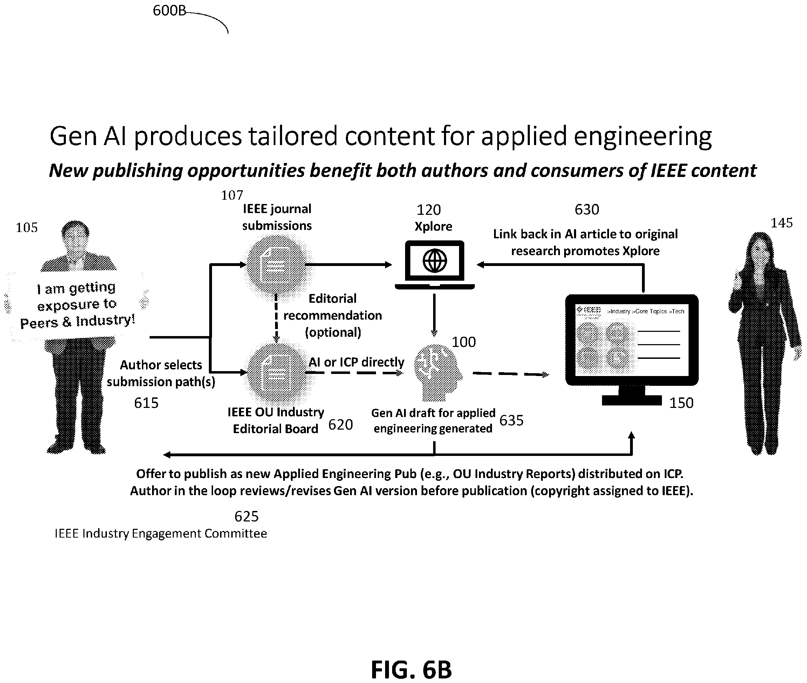

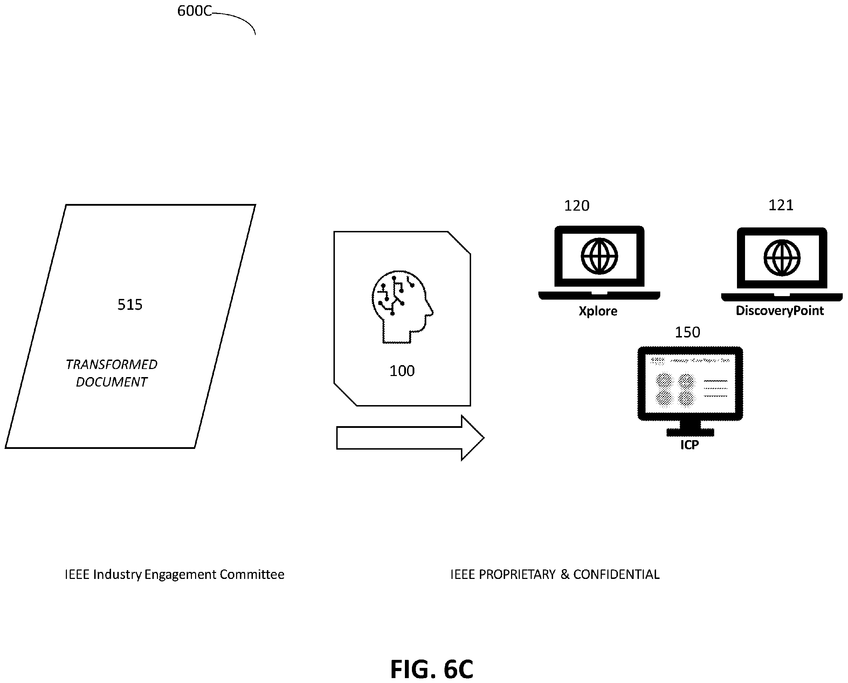

Regarding FIGS. 6A, 6B, and 6C, the figures illustrate the Industry Content Platform 150 in accordance with some embodiments of the present invention. The Industry Content Platform 150 serves as the interface between the AI system, authors, and industry practitioners. Regarding FIG. 6A, 600A the figure illustrates the new Industry Content Platform 150. The platform significantly enhances the customer experience by centralizing all IEEE industry content in one place. It organizes various content types based on external needs, categorizing them into Industry (e.g., Telecommunications), Core Topics (e.g., Artificial Intelligence), and Tech Areas (e.g., Semiconductors). The platform is fully indexed and searchable, leveraging the latest generative AI search capabilities to provide efficient and accurate results. Additionally, the platform introduces a new channel for industry submissions and generative AI-generated content, ensuring a comprehensive and user-friendly content management system.

Furthermore, referring to FIG. 6A, the figure illustrates the enhanced Industry Content Platform 150 interface that may serve as a centralized hub for IEEE industry content. The computing device 800 may provide user access to the platform through various interfaces including web browsers and dedicated applications. The content databases 135 may store the transformed academic papers alongside industry-specific metadata and categorization information. The transformation module 100 may process incoming academic content to generate industry-oriented articles optimized for practitioner consumption.

The Industry Content Platform 150 may organize content according to multiple taxonomies that align with industry needs and professional development pathways. Content categorization may include industry verticals such as telecommunications, manufacturing, and healthcare, enabling practitioners to locate relevant research within their specific domains. Core technology topics such as artificial intelligence, machine learning, and cybersecurity may provide cross-industry accessibility to fundamental research areas. Technical specializations including semiconductors, power systems, and wireless communications may offer detailed coverage for specialized practitioners.

The platform's search capabilities may leverage generative AI technologies to provide contextual understanding of user queries and content relationships. Search algorithms may analyze user intent and professional background to deliver personalized results that prioritize relevance for specific industry applications. The search interface may support natural language queries that allow practitioners to describe problems or challenges rather than requiring precise technical terminology.

Regarding FIG. 6B, 600B the figure illustrates the publishing workflow of the new Industry Content Platform 150. The platform enhances the customer experience through an advanced content management system, centralizing all IEEE industry content. It offers new publishing opportunities, such as the Applied Engineering Pub (e.g., OU Industry Reports), distributed on the Industry Content Platform 150 (ICP). Authors are involved in the review and revision process of the Generative AI (Gen AI) versions before publication, with copyright assigned to IEEE. This ensures high-quality, tailored content for applied engineering. The platform benefits both authors and consumers by providing a streamlined, user-friendly experience and expanding the reach of IEEE's specialized content.

Referring to FIG. 6B, the publishing workflow 600B illustrates the process flow for generating and publishing industry-oriented content through the Industry Content Platform 150. Element 615 may represent author selecting submission paths for their publications. Element 620 represents the IEEE OU Industry Editorial Board that provides oversight and quality control for the content transformation process. The editorial board may evaluate submissions 615 and provide recommendations for content that may be suitable for conversion into industry-focused articles. The board may also establish criteria and standards that guide the AI agents in their content transformation activities.

Element 635 may represent the Gen AI draft generation process that creates preliminary versions of industry-oriented articles from academic source material. This process may involve the Editor AI Agent 104 performing contextual analysis of the original academic content and generating initial drafts that adapt complex theoretical concepts into more accessible industry language. The Gen AI draft may incorporate multimedia elements and restructure the content to emphasize practical applications and real-world implementations relevant to industry practitioners.

Element 625 may represent the author review and revision loop that ensures quality and accuracy of the transformed content before publication. During this phase, the corresponding author 145 may be presented with the Gen AI draft for evaluation and feedback. The author may suggest modifications, provide additional context, or clarify technical points to ensure the transformed content accurately represents the original research findings. This collaborative process may involve multiple iterations between the AI system and the author until consensus is reached on the final content quality.

Element 630 may represent link back to the original research in Xplore database 120. This may be part of the publication process where the finalized industry-oriented article is distributed through the Industry Content Platform 150. The Publisher AI Agent 108 may manage this phase by ensuring all quality standards have been met, adding appropriate metadata and categorization, and implementing distribution across relevant channels. The published content may include enhanced multimedia elements, industry-specific examples, and cross-references to the original academic publication in IEEE Xplore to maintain citation integrity and provide readers with access to the complete research context.

Furthermore, referring to FIG. 6B, the figure depicts the publishing workflow that may integrate author collaboration with AI-generated content enhancement. The user 105 may represent original academic authors who participate in the content transformation process through iterative review and refinement cycles. The AI Agent Modules 107 may coordinate the workflow from initial content analysis through final publication approval. The system 120 may represent IEEE Xplore integration that maintains connections between transformed articles and their original academic sources.

The workflow may begin when academic authors submit their research through traditional IEEE publication channels or when the system identifies suitable papers for transformation. The Editor AI Agent 145 may perform initial content analysis and generate preliminary industry-oriented drafts that preserve technical accuracy while enhancing accessibility. The transformation process may include restructuring content to emphasize practical applications, replacing academic terminology with industry-standard language, and integrating relevant case studies or implementation examples.

Author involvement may occur at multiple stages throughout the transformation process to ensure content fidelity and accuracy. Authors may review initial drafts generated by the Editor AI Agent 150 and provide feedback on technical accuracy, practical relevance, and industry context. The system may incorporate author corrections and suggestions into subsequent iterations, creating a collaborative refinement process that leverages both AI efficiency and human expertise. The revision tracking module 100 may maintain detailed records of all changes and author inputs to support quality assurance and continuous improvement processes.

The publishing workflow may include multiple quality checkpoints before final publication on the Industry Content Platform 150. The Peer Review AI Agent may assess content quality using established criteria for clarity, technical accuracy, and industry relevance. Human editorial oversight may be applied when content complexity or novelty requires additional validation. Copyright assignment to IEEE may ensure appropriate intellectual property management while providing authors with expanded reach for their research findings.

Regarding FIG. 6C, 600C the figure illustrates the integration of the new Industry Content Platform 150 with existing IEEE products. The platform could significantly enhance the IEEE subscription product portfolio by integrating with existing products like IEEE Xplore and Discovery Point. By leveraging AI outputs, the platform can offer advanced data analysis, personalized content curation, and automated research assistance. For instance, IEEE Xplore could benefit from improved search capabilities, providing users with more accurate and relevant results based on their specific needs. Discovery Point could be enhanced with AI-driven recommendations, helping users discover new and relevant content tailored to their interests. These improvements would streamline information discovery, offer tailored recommendations, and provide sophisticated tools for analyzing trends and patterns within large datasets. This integration would lead to more efficient research processes, higher quality outputs, and an enriched user experience.

Furthermore, referring to FIG. 6C, the figure illustrates the integration architecture that may connect the Industry Content Platform 150 with existing IEEE products and services. The transformed document 515 may serve as the foundation for enhanced content that flows into multiple IEEE platforms and services. The transformation module 100 may generate platform-specific versions of content optimized for different user interfaces and consumption patterns.

IEEE Xplore 120 integration may provide bidirectional connectivity between original academic papers and their industry-oriented counterparts. Users accessing transformed content may navigate directly to source academic papers for deeper technical detail, while users browsing academic content may discover relevant industry applications through cross-references to transformed articles. This integration may enhance the value proposition of IEEE Xplore subscriptions by providing multiple perspectives on research findings.

Discovery Point 121 integration may leverage AI-generated content to enhance research discovery and recommendation capabilities. The system may analyze user behavior patterns across both academic and industry content to suggest relevant materials that span traditional disciplinary boundaries. Machine learning algorithms may identify connections between academic research and practical applications that may not be immediately apparent to users, facilitating knowledge transfer across domains.

The Industry Content Platform 150 may provide a unified interface that aggregates content from multiple sources while maintaining appropriate access controls and subscription management. Corporate subscribers may access curated content collections tailored to their industry focus and organizational needs. Individual practitioners may receive personalized content recommendations based on their professional background, current projects, and career development goals. The platform may support various consumption modes including traditional article reading, interactive multimedia experiences, and mobile-optimized formats for on-demand access.

### Method for Converting Academic Papers

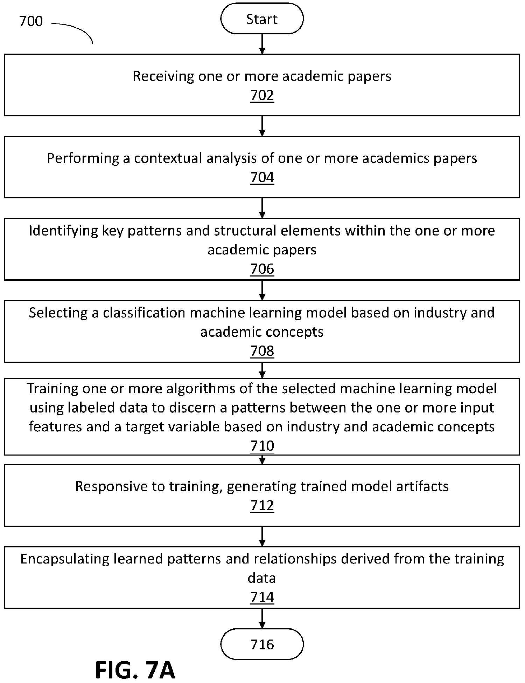

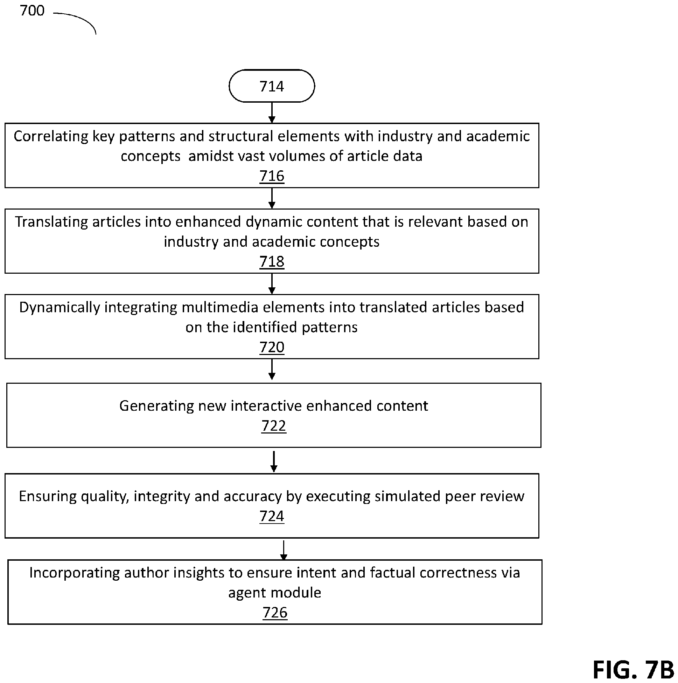

FIGS. 7A and 7B are flowcharts 700 that describe a method for converting academic papers into quality-assured, industry-oriented articles, according to some embodiments of the present disclosure. The method leverages machine learning techniques to analyze academic content, identify key patterns and concepts, and generate industry-relevant articles.

Referring to FIG. 7A, at block 702, the method includes receiving one or more academic papers. These papers may be obtained through integration with academic databases such as IEEE Xplore or through direct submission by authors or publishers. At block 704, the method includes performing a contextual analysis of the academic papers. This analysis involves understanding the structure, terminology, methodology, and findings presented in the papers. At block 706, the method includes identifying key patterns and structural elements within the academic papers. This may involve recognizing common academic paper components such as abstract, introduction, methodology, results, discussion, and conclusion, as well as identifying key concepts, findings, and potential applications. At block 708, the method includes selecting a classification machine learning model based on industry and academic concepts. The selection may depend on factors such as the paper's subject matter, complexity, and target industry audience. At block 710, the method includes training one or more algorithms of the selected machine learning model using labeled data to discern patterns between the input features and target variables based on industry and academic concepts. This training enables the model to learn how to effectively transform academic content into industry-relevant format. At block 712, responsive to training, the method includes generating trained model artifacts. These artifacts encapsulate the learned patterns and relationships that will guide the content transformation process. At block 714, the method includes encapsulating learned patterns and relationships derived from the training data. These patterns and relationships form the basis for the subsequent content transformation steps.

Referring to FIG. 7B, at block 716, the method includes correlating key patterns and structural elements with industry and academic concepts amidst vast volumes of article data. This correlation helps identify the most relevant aspects of the academic paper for industry practitioners. At block 718, the method includes translating articles into enhanced dynamic content that is relevant based on the identified patterns. This translation involves adapting academic terminology to industry-standard language, restructuring content to prioritize practical applications, and enhancing clarity for the target audience. At block 720, the method includes dynamically integrating multimedia elements into translated articles based on the identified patterns. These multimedia elements may include diagrams, graphs, interactive simulations, and other visual aids that enhance understanding of complex concepts. At block 722, the method includes generating new interactive enhanced content. This may involve creating interactive elements that allow users to explore concepts in more depth or visualize data in different ways. At block 724, the method includes ensuring quality, integrity, and accuracy of content by executing a simulated peer review. This review assesses the transformed content against established criteria for quality, relevance, and accuracy. At block 726, the method includes incorporating author insights to ensure intent and factual correctness. This collaborative approach ensures that the transformed content accurately represents the original research findings and intentions.

### Computing Device Architecture

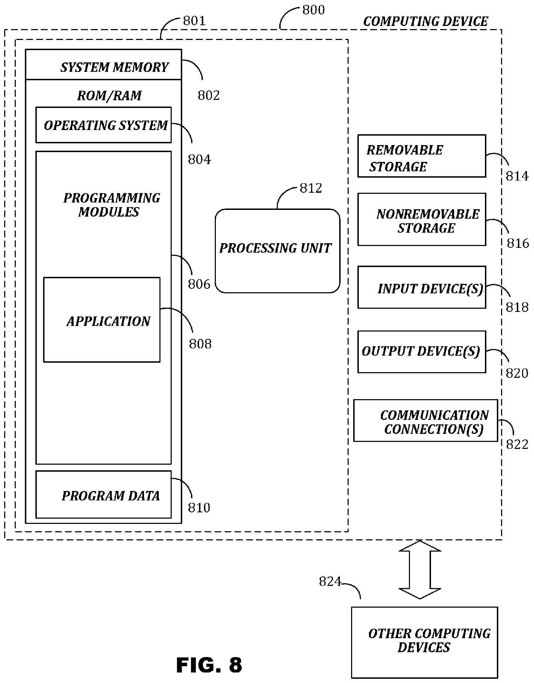

FIG. 8 depicts a block diagram of a system including computing device 800. Consistent with an embodiment of the disclosure, the aforementioned memory storage and processing unit may be implemented in a computing device, such as computing device 800 of FIG. 8. Any suitable combination of hardware, software, or firmware may be used to implement the memory storage and processing unit. For example, the memory storage and processing unit may be implemented with computing device 800 or any of other computing devices 824, in combination with computing device 800. The aforementioned system, device, and processors are examples and other systems, devices, and processors may comprise the aforementioned memory storage and processing unit, consistent with embodiments of the disclosure.

With reference to FIG. 8, a system consistent with an embodiment of the disclosure may include a computing device, such as computing device 800. In a basic configuration, computing device 800 may include at least one processing unit 812 and a system memory 802. Depending on the configuration and type of computing device, system memory 802 may comprise, but is not limited to, volatile (e.g. random access memory (RAM)), nonvolatile (e.g. read-only memory (ROM)), flash memory, or any combination. System memory 802 may include operating system 804, one or more programming modules 806, and may include a program data 810. Operating system 804, for example, may be suitable for controlling computing device 800's operation. In one embodiment, programming modules 806 may include AI agents and programming modules. Furthermore, embodiments of the disclosure may be practiced in conjunction with a graphics library, other operating systems, or any other application program and is not limited to any particular application or system. This basic configuration is illustrated in FIG. 8 by those components within a dashed line 801.

Computing device 800 may have additional features or functionality. For example, computing device 800 may also include additional data storage devices (removable and/or non-removable) such as, for example, magnetic disks, optical disks, or tape. Such additional storage is illustrated in FIG. 8 by a removable storage 814 and a non-removable storage 816. Computer storage media may include volatile and nonvolatile, removable and non-removable media implemented in any method or technology for storage of information, such as computer readable instructions, data structures, program modules, or other data. System memory 802, removable storage 814, and non-removable storage 816 are all computer storage media examples (i.e., memory storage.) Computer storage media may include, but is not limited to, RAM, ROM, electrically erasable read-only memory (EEPROM), flash memory or other memory technology, CD-ROM, digital versatile disks (DVD) or other optical storage, magnetic cassettes, magnetic tape, magnetic disk storage or other magnetic storage devices, or any other medium which can be used to store information and which can be accessed by computing device 800. Any such computer storage media may be part of device 800. Computing device 800 may also have input device(s) 818 such as a keyboard, a mouse, a pen, a sound input device, a touch input device, etc. Output device(s) 820 such as a display, speakers, a printer, etc. may also be included. The aforementioned devices are examples and others may be used.

Computing device 800 may also contain a communication connection 822 that may allow device 800 to communicate with other computing devices 824, such as over a network in a distributed computing environment, for example, an intranet or the Internet. Communication connection 822 is one example of communication media. Communication media may typically be embodied by computer readable instructions, data structures, program modules, or other data in a modulated data signal, such as a carrier wave or other transport mechanism, and includes any information delivery media. The term "modulated data signal" may describe a signal that has one or more characteristics set or changed in such a manner as to encode information in the signal. By way of example, and not limitation, communication media may include wired media such as a wired network or direct-wired connection, and wireless media such as acoustic, radio frequency (RF), infrared, and other wireless media. The term computer readable media as used herein may include both storage media and communication media.

As stated above, a number of program modules and data files may be stored in system memory 802, including operating system 804. While executing on processing unit 812, programming modules 806 may run applications 808 which may perform processes including, for example, one or more of method 700's stages as described above. The aforementioned process is an example, and processing unit 812 may perform other processes. Other programming modules that may be used in accordance with embodiments of the present disclosure may include electronic mail and contacts applications, word processing applications, spreadsheet applications, database applications, slide presentation applications, drawing or computer-aided application programs, etc.

Generally, consistent with embodiments of the disclosure, program modules may include routines, programs, components, data structures, and other types of structures that may perform particular tasks or that may implement particular abstract data types. Moreover, embodiments of the disclosure may be practiced with other computer system configurations, including hand-held devices, multiprocessor systems, microprocessor-based or programmable consumer electronics, minicomputers, mainframe computers, and the like. Embodiments of the disclosure may also be practiced in distributed computing environments where tasks are performed by remote processing devices that are linked through a communications network. In a distributed computing environment, program modules may be located in both local and remote memory storage devices.

Furthermore, embodiments of the disclosure may be practiced in an electrical circuit comprising discrete electronic elements, packaged or integrated electronic chips containing logic gates, a circuit utilizing a microprocessor, or on a single chip containing electronic elements or microprocessors. Embodiments of the disclosure may also be practiced using other technologies capable of performing logical operations such as, for example, AND, OR, and NOT, including but not limited to mechanical, optical, fluidic, and quantum technologies. In addition, embodiments of the disclosure may be practiced within a general purpose computer or in any other circuits or systems.

Embodiments of the disclosure, for example, may be implemented as a computer process (method), a computing system, or as an article of manufacture, such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process. Accordingly, the present disclosure may be embodied in hardware and/or in software (including firmware, resident software, micro-code, etc.). In other words, embodiments of the present disclosure may take the form of a computer program product on a computer-usable or computer-readable storage medium having computer-usable or computer-readable program code embodied in the medium for use by or in connection with an instruction execution system. A computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific computer-readable medium examples (a non-exhaustive list), the computer-readable medium may include the following: an electrical connection having one or more wires, a portable computer diskette, a random access memory (RAM), a read-only memory (ROM), an erasable programmable read-only memory (EPROM or Flash memory), an optical fiber, and quantum computing elements. Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

Embodiments of the present disclosure, for example, are described above with reference to block diagrams and/or operational illustrations of methods, systems, and computer program products according to embodiments of the disclosure. The functions/acts noted in the blocks may occur out of the order as shown in any flowchart. For example, two blocks shown in succession may in fact be executed substantially concurrently or the blocks may sometimes be executed in the reverse order, depending upon the functionality/acts involved..

### Implementation Examples

The system may be implemented in various forms to support different use cases and deployment scenarios.

The following examples illustrate some possible implementations of the invention:
1. Enterprise Knowledge Management System: The system may be deployed within a corporate environment to transform academic research into practical knowledge resources for employees. In this implementation, the system may integrate with existing corporate knowledge bases and learning management systems. The AI agents may be configured to prioritize industry applications specific to the company's domain, and the multimedia elements may be tailored to match corporate branding guidelines. The system may also incorporate company-specific terminology and reference internal case studies where appropriate.
2. Academic-Industry Partnership Platform: The system may serve as a collaborative platform between universities and industry partners. In this implementation, academic institutions may contribute research papers, while industry partners may provide feedback on practical applications and implementation challenges. The AI agents may facilitate this collaboration by identifying potential synergies between academic research and industry needs. The platform may include features for joint project development and tracking of research commercialization efforts.
3. Professional Development Resource: The system may be implemented as a continuing education platform for professionals seeking to stay current with research advancements in their field. In this scenario, the content may be organized into learning paths aligned with professional certification requirements. The AI agents may tailor content based on the user's professional background, current role, and career aspirations. Interactive elements may include self-assessment tools and practical exercises to apply theoretical concepts.
4. Industry-Specific Knowledge Hub: The system may be customized for particular industries such as healthcare, finance, or manufacturing. In these implementations, the AI agents may be trained on domain-specific terminology and regulations. The content adaptation process may emphasize compliance considerations and industry best practices. Multimedia elements may include industry-standard visualizations and interactive tools relevant to practitioners in that specific field.
5. Global Knowledge Transfer System: The system may be implemented with multilingual capabilities to facilitate knowledge transfer across different regions and languages. In this implementation, the AI agents may include translation capabilities and cultural adaptation features. The system may account for regional differences in industry practices and regulatory environments when generating content. Multimedia elements may be designed to be culturally appropriate and accessible across different technological infrastructures.
6. Web-based Platform: The system may be implemented as a web-based platform accessible to authors, industry practitioners, and system administrators. The platform may include a dashboard for authors to track the progress of their papers through the conversion process and provide feedback. The platform may also include a searchable repository of converted articles for industry practitioners. Additionally, the platform may include an administrative interface for managing the AI agents and overseeing the conversion workflow.
7. Mobile Application: The system may also be offered as a mobile application, allowing users to access converted content on-the-go. Features may include push notifications for authors when their content requires review. The mobile application may provide offline access to downloaded articles. The application may also include audio narration of converted articles for hands-free consumption.
8. API Integration: The system may provide APIs allowing integration with existing content management systems or corporate knowledge bases. This integration may enable automatic submission of new publications for conversion. The APIs may allow seamless incorporation of converted content into company intranets or training platforms. The system may also support real-time updates to converted articles based on new research or author feedback.
9. Virtual Reality (VR) Experience: For highly complex or visual topics, the system may generate VR experiences to enhance understanding. For example, the system may create a VR simulation of a new manufacturing process described in a paper. The system may generate an interactive 3D model of a novel molecular structure. The system may also produce a virtual walk-through of a proposed urban planning design.
10. AI-powered QA System: The system may include an AI-powered question-answering capability trained on the converted content. This could allow industry practitioners to ask specific questions and receive relevant answers extracted or inferred from the converted articles.

### Technical Enhancements

The system may include various technical enhancements to improve its functionality, performance, and user experience. These enhancements may include:
1. **Machine Learning Module:** The system may include a machine learning module for continuously improving the content conversion process. This module may analyze data from past interactions between the AI agents and human authors to identify patterns and optimize the workflow. For example, it may learn which types of content tend to require more iterations with authors and adjust the initial drafts accordingly.
2. **Natural Language Processing Capabilities:** The system may incorporate advanced natural language processing capabilities to enhance the contextual analysis of academic papers. This may allow for more nuanced understanding of complex technical concepts and their potential industry applications. The natural language processing may identify key terms, methodologies, and findings that are most relevant for industry practitioners.
3. **Multimedia Generation Component:** A multimedia generation component may be included to automatically create visual aids, interactive elements, and other media to enhance the industry-oriented content. This may involve analyzing the text of the academic paper to identify concepts that could benefit from visual representation, then generating appropriate diagrams, charts, or animations. The system may also create interactive elements like simulations or calculators that allow industry users to explore the practical applications of the research.
4. **Simulated Multi-Perspective Review:** The peer review process implemented by the Peer Review AI Agent may simulate multiple reviewers with different areas of expertise. This could involve generating critiques from the perspectives of academic researchers, industry practitioners, and subject matter experts in related fields. The simulated reviews may be aggregated and analyzed to provide a comprehensive assessment of the converted content's quality and relevance.
5. **Version Control Functionality:** The system may implement version control functionality to track changes made throughout the content conversion process. This would allow for easy comparison between different iterations and provide a clear record of how the content evolved from the original academic paper to the final industry-oriented article. Authors and editors could use this feature to review specific changes and ensure the final version accurately reflects the original research while meeting industry needs.
6. **Analytics Module:** An analytics module may be incorporated to track user engagement with the published industry-oriented content. This could measure metrics such as views, time spent reading, interactions with multimedia elements, and sharing of articles. The analytics data could be used to refine the content conversion process, identifying which types of content and presentation styles are most effective for industry audiences.
7. **Content Recommendation Engine:** The system may include a content recommendation engine that suggests related articles or research to users based on their browsing history and engagement patterns. This could help industry practitioners discover relevant content across different technical domains, fostering interdisciplinary knowledge transfer.
8. **Collaboration Feature:** A collaboration feature may allow multiple authors or industry experts to work together on refining the converted content. This could involve a shared workspace where contributors can leave comments, suggest edits, or add additional context relevant to specific industry applications.
9. **Search Engine Optimization:** The Publisher AI Agent may implement search engine optimization techniques to ensure the published industry-oriented content is easily discoverable by relevant audiences. This could involve analyzing industry trends and search patterns to optimize article titles, metadata, and content structure for maximum visibility.
10. **Academic-Industry Feedback Loop:** The system may incorporate a feedback loop with the original academic publication process. Insights gained from the industry content conversion, such as identification of high-impact research areas or emerging application trends, could be shared with academic publishers to inform future research directions and publication strategies.

### Potential Applications

The system may be used in various contexts and for different purposes beyond the core functionality of converting academic papers into industry-oriented articles. Some potential applications include:
**Prediction of Emerging Industry Needs:** The platform may be configured to include the integration of machine learning models capable of predicting emerging industry trends, needs, and applications by analyzing the industry-translated articles and user engagement patterns.

**Expansion to Other Input Types:** The platform may be adapted for other types of content, such as patents, technical reports, presentations, videos, and policy research, broadening its applicability and impact across different domains and content formats.

**Interactive Content Features:** The platform may provide interactive elements in the generated articles, such as dynamic graphs and simulations, that allow users to manipulate data points or conditions to see different outcomes, as well as interactive article Q&A, enhancing user engagement and understanding of the material.

**Customized Learning Materials:** The platform may be adapted or configured to leverage user input and preferences to tailor the transformation of academic content to match individual learning styles and professional needs. This would enrich the learning experience by making it more personal and relevant.

**Corporate Education and Training:** The platform may be configured to allow companies to deploy a training system to ensure their employees are informed about the latest research and developments relevant to their fields. This would make training materials not only up-to-date but also tailored to specific industry requirements.

**Educational Applications:** The platform may be configured for educational settings such that the system could be used to convert high-level academic research into industry-oriented materials that are used for class-based learning and research for students, as well as preparing students more effectively for their transition into professional careers.

**Professional Development:** The system may be used to generate content to support professional certification or accreditation processes relevant to specific fields, helping practitioners stay current with the latest research and best practices in their domains.

**Cross-Disciplinary Knowledge Transfer:** The platform may facilitate the transfer of knowledge across different disciplines by translating research from one field into language and examples relevant to practitioners in other fields, fostering innovation through interdisciplinary insights.

**Policy Development:** The system may be used to convert complex research findings into formats accessible to policy makers, helping bridge the gap between academic research and policy development by presenting evidence in clear, actionable terms.

**Public Understanding of Science:** The platform may be adapted to create content for the general public, translating cutting-edge research into accessible explanations that enhance public understanding of science and technology advancements.

The system and method for converting academic research publications into quality-assured, practitioner-accessible content provides several technical advantages that enhance the transformation of complex academic knowledge into industry-relevant formats. These advantages include:

### 1. Enhanced Content Accessibility Through AI-Driven Contextual Analysis

The system may perform sophisticated contextual analysis of academic papers using specialized AI agents that identify key patterns and structural elements within the input content. This analysis may correlate academic concepts with industry applications through extensive training on diverse language datasets. The contextual understanding enables the system to preserve technical accuracy while making content more accessible to industry practitioners who may lack specialized academic backgrounds.

### 2. Improved Knowledge Transfer Through Dynamic Multimedia Integration

The multimedia enhancement capabilities may significantly improve knowledge transfer by dynamically integrating visual elements tailored to industry needs. The system may select relevant existing multimedia based on content context and generate new visual elements such as graphs, diagrams, and interactive media. These multimedia elements may enhance understanding of complex concepts by providing visual representations that complement textual explanations, making abstract academic concepts more concrete and applicable.

### 3. Increased Content Accuracy Through Collaborative Feedback Loops

The collaborative feedback mechanism may establish iterative communication with original authors to refine and validate converted articles. This human-in-the-loop approach may ensure the integrity and accuracy of the content while maintaining fidelity to the original research intent. By incorporating author insights and corrections, the system may address a critical limitation of fully automated content transformation systems-the risk of misinterpreting or misrepresenting complex academic concepts.

### 4. Enhanced Quality Assurance Through Simulated Peer Review

The simulated peer review mechanism may provide consistent quality assessment using criteria established by industry experts and academic professionals. This approach may evaluate factors such as clarity, practical relevance, and technical accuracy. The system may execute these evaluations with optional human intervention when necessary, creating a scalable quality assurance process that maintains high standards while processing large volumes of content. Human intervention is tracked such that all edits become training data for continuous improvement of the simulated peer review by the Peer Review AI Agent..

### 5. Continuous Improvement Through Self-Learning Capabilities

The system's self-learning framework may enable continuous improvement by capturing feedback data from author interactions and user engagement. This data feeds into an online machine learning process that updates reference models used by the AI agents. This adaptive capability may allow the system to progressively enhance its performance, becoming more efficient and effective with each content transformation project.

### 6. Reduced Knowledge Translation Time and Effort

The automated workflow may significantly reduce the time and effort required to transform academic research into industry-relevant content. Traditional manual approaches to knowledge translation often require extensive collaboration between researchers and industry writers, which can be time-consuming and resource-intensive. The AI-driven system may streamline this process while maintaining quality through its specialized agent architecture and quality assurance mechanisms.

These technical advantages collectively address the critical challenge of bridging the gap between academic research and industry application, enabling more effective knowledge transfer and potentially accelerating innovation across various technical domains.

The multimedia elements in the translated articles may be dynamically integrated based on the identified patterns within the academic content. This integration may involve AI algorithms that select relevant visual representations according to the context and subject matter of the paper. The system may also generate new multimedia elements, such as graphs, diagrams, and interactive media, specifically tailored to enhance understanding and engagement for industry practitioners.

The dynamic integration process may begin with an analysis of the academic paper's structure and content to identify concepts that would benefit from visual representation. For key technical concepts, the system may create custom visualizations that simplify complex relationships or processes. These visualizations may be designed to highlight practical applications relevant to industry contexts, making theoretical concepts more accessible.

The multimedia generation may be informed by industry best practices and user experience principles to ensure optimal engagement. Interactive elements may allow users to explore data or concepts at their own pace, potentially including simulations that demonstrate how variables affect outcomes in real-world scenarios. The system may also incorporate responsive design principles to ensure that multimedia elements display appropriately across different devices and screen sizes.

When selecting or generating multimedia elements, the system may consider the target audience's technical background and industry focus. For example, visualizations for manufacturing professionals might emphasize production workflows, while those for software developers might highlight system architectures or algorithms. This tailored approach may help ensure that the multimedia elements effectively bridge the gap between academic theory and practical application.

Throughout this process, the system may maintain a balance between comprehensive information and clarity, avoiding visual clutter while ensuring that the multimedia elements accurately represent the underlying academic concepts. The integration of these elements with the text may be seamless, with appropriate placement and references to enhance rather than interrupt the reading experience.

Each of the processes, methods, and algorithms described in the preceding sections may be embodied in, and fully or partially automated by, code components executed by one or more computer systems or computer processors comprising computer hardware. The one or more computer systems or computer processors may also operate to support performance of the relevant operations in a "cloud computing" environment or as a "software as a service" (SaaS). The processes and algorithms may be implemented partially or wholly in application-specific circuitry. The various features and processes described above may be used independently of one another, or may be combined in various ways. Different combinations and sub-combinations are intended to fall within the scope of this disclosure, and certain method or process blocks may be omitted in some implementations. The methods and processes described herein are also not limited to any particular sequence, and the blocks or states relating thereto can be performed in other sequences that are appropriate, or may be performed in parallel, or in some other manner. Blocks or states may be added to or removed from the disclosed example embodiments. The performance of certain of the operations or processes may be distributed among computer systems or computer processors, not only residing within a single machine, but deployed across a number of machines.

While the specification includes examples, the disclosure's scope is indicated by the following claims. Furthermore, while the specification has been described in language specific to structural features and/or methodological acts, the claims are not limited to the features or acts described above. Rather, the specific features and acts described above are disclosed as examples for embodiments of the disclosure.

Insofar as the description above and the accompanying drawing disclose any additional subject matter that is not within the scope of the claims below, the disclosures are not dedicated to the public and the right to file one or more applications to claims such additional disclosures is reserved.

While the invention has been described with respect to specific embodiments, those skilled in the art will recognize that numerous variations and modifications may be made without departing from the scope and spirit of the invention. Accordingly, it should be understood that the foregoing description is intended to illustrate rather than limit the scope of the invention as defined by the appended claims.

## Claims

1. A method for transforming content for a target audience, comprising:
performing a contextual analysis of input content through an adaptive AI-driven process that identifies key patterns and structural elements within the input content and correlates these elements with concepts previously learned through training on diverse data sets;
generating transformed content based on the contextual analysis; and
validating the transformed content through a quality assurance process.

2. The method of claim 1, wherein generating transformed content comprises dynamically integrating multimedia elements into the transformed content.

3. The method of claim 1, wherein validating the transformed content comprises executing a simulated peer review mechanism that assesses quality and relevance of the transformed content using established criteria.

4. The method of claim 1, wherein the contextual analysis comprises identifying potential candidates for roles through AI-based screening of content.

5. The method of claim 1, further comprising generating recommendations for career paths and skill development based on analysis of member data and job market trends.

6. The method of claim 4, wherein the multimedia elements comprise interactive simulations to enhance understanding of complex concepts.

7. The method of claim 1, further comprising adapting the generated content based on a reader's job function, responsibility, line of business, and title.

8. The method of claim 5, wherein the simulated peer review comprises evaluation of the content's practical applicability in industry settings.

9. The method of claim 1, further comprising generating content to support professional certification processes relevant to a reader's field.

10. The method of claim 1, further comprising tailoring language and complexity of the generated content based on a reader's experience level and background.

11. The method of claim 1, further comprising generating executive summaries of the transformed content tailored for different levels of management.

12. A system for transforming content for a target audience, comprising:
a network of autonomous, specialized AI agents that interact with one another through APIs to perform distinct tasks within a content conversion workflow;
integration with content databases to facilitate real-time data access; and
iterative communication modules for engaging with humans until consensus is reached on content quality.

13. The system of claim 12, further comprising a self-learning AI framework configured to enable an autonomous, self-improving feedback loop by using data from interactions with human authors as training data, wherein the data feeds an ongoing machine learning process, progressively enhancing system performance.

14. The system of claim 12, further comprising a virtual guidance counselor component that provides personalized recommendations for professional development and engagement opportunities.

15. The system of claim 12, further comprising an AI-driven component for matching generated content to relevant job postings.

16. The system of claim 12, further comprising a component for generating personalized learning paths based on a user's career trajectory and industry trends.

17. The system of claim 12, further comprising an AI-driven component for identifying emerging industry trends and incorporating them into the generated content.

18. The system of claim 12, further comprising a component for analyzing user engagement data to continuously refine and improve the content generation process.

19. The system of claim 12, further comprising a component for integrating real-time industry data into the generated content.

20. An apparatus for transforming content for a target audience, comprising:
a processing unit configured to execute an adaptive AI-driven process that identifies key patterns and structural elements within input content;
a memory storing algorithms configured to correlate the identified elements with concepts previously learned through training on diverse data sets; and
a communication interface configured to facilitate validation of transformed content through a quality assurance process.
